Europäisches Patentamt

European Patent Office

Office européen des brevets

(11) Publication number: **0 361 555**
**A1**

## EUROPEAN PATENT APPLICATION

(21) Application number: **89202075.1**

(22) Date of filing: **11.08.89**

(51) Int. Cl.5 **A01G 9/02**

(30) Priority: **02.09.88 NL 8802175**

(43) Date of publication of application:
**04.04.90 Bulletin 90/14**

(84) Designated Contracting States:
**BE DE FR GB LU NL**

(71) Applicant: **PLASTICALL B.V.**
**P.O. Box 28**
**NL-1620 AA Hoorn(NL)**

(72) Inventor: **Boender, Jacob Cornelis Pieter**
**De hout 28**
**NL-1607 HB Hem(NL)**

(74) Representative: **de Vries, Johannes Hendrik**
**Fokke et al**
**Octrooibureau Los en Stigter B.V. P.O. Box**
**20052**
**NL-1000 HB Amsterdam(NL)**

(54) **Garden Pond.**

(57) A garden pond (1) having a bottom wall (2) and an adjacent side wall (3) can be provided with a plurality of containers (5) for marsh plants or the like releasably attached to the inner side of the side wall (3) of the garden pond (1). The containers (5) may be arranged in abutting relationship and on different levels. This offers the possibility to create optimal growing conditions for various varieties of marsh plants forming a bank covering of the garden pond.

fig.1

EP 0 361 555 A1

# Garden pond

The invention relates to a garden pond having a bottom wall and an adjacent side wall.

Garden ponds of this type are known in various embodiments and are usually placed in a hole digged in the garden, so that the upper edge of the garden pond is substantially flush with the surface of the surrounding garden or the like. In most cases attempts are made to plant the edge of the pond or to cover it with stones or the like. For this purpose, a known embodiment of a garden pond is provided at its circumference with a channel extending outwardly of the side wall and communicating with the water in the pond by means of an overflow.

This garden pond has a number of disadvantageous. The channel, for instance, has a limited depth as a result of which plants having an extensive root system cannot be rooted well in the channel. Furthermore, it can happen that the water level in the pond falls to such an extent that the overflow comes above the water and the channel can run dry. Plants in the channel also not separated from each other, whereby one plant can easily overgrow the other.

The invention has as its object to provide an improved garden pond wherein side disadvantage are removed.

For this purpose, the garden pond according to the invention is characterized by a container, for instance for marsh plants, of which at least the top is open and which is adapted to be arranged adjacent to the side wall of the garden pond.

With this container it is possible to realize a flexible bank planting system.

Preferably the garden pond according to the invention is constructed such that the container is adapted to be provided on the inner side of the side wall thereof.

As a result the container ie in direct contact with the water in the pond since a passage for the water of the pond can be provided in the lower side of the container, thereby reducing the risk of the container running dry when the water level in the pond is low.

It is advantageously when a container is adapted to be releasably attached to the inner side of the side wall.

This feature makes it possible to remove the container from the garden pond, for example to put in new plants.

A very favourable embodiment of the garden pond according to the invention is characterized in that the container can be attached on different levels.

In this way it is possible to optimally adapt the container to the vegetation or bank covering contained therein. In the highest position of the container, for example, stones may be put into the container, which stones also lie on the edge of the garden pond and the surroundings thereof. Furthermore, the container can be arranged lower the more depth the plants to be put in the container need for their roots. As a result any plant variety can be offered an optimal condition for growing.

A simple way of mounting the container adjustable in height is possible when a support, such as a hook, attachable to the side wall of the pond is provided with a plurality of coupling means arranged on different levels and being adapted to couple the container on different levels.

In addition it is possible that the support has a plurality of regularly vertically spaced projections and that the container has on at least one side a plurality of vertically arranged openings in which the projections can engage.

Preferably, the center distance between two adjacent openings in the container is twice as small as the center distance between two adjacent projections of the side wall, there being at least two hooks coupled with openings in the container.

In this way a fine height adjustment of the container is enabled, while there is also provided a stable adjustment of the container to the side wall of the garden pond.

It is of great advantage if a plurality of separate containers, for instance for marshplants, are adapted to be distributed about the circumference of the garden pond.

Due to this measurements the possibilities for arranging a bank covering are optimized. In case the containers can be attached on different level it is possible to dispose different kinds of plants or bank coverings along the circumference of the pond, wherein each container can be adjusted separately.

In addition it is favourable when supports are distributed about the circumference of the side wall of the garden pond, the supports having coupling means to which separate containers can be coupled such that they substantially abut. In this way plants may be arranged along the whole circumference of the garden pond, while different plants may be separated from another by putting them in different containers, thereby reducing the risk of overgrowing.

A favourable embodiment of the garden pond according to the invention is characterized in that each container comprises two pairs of opposite sides, wherein the sides of the first pair are each provided with counter-coupling means for attaching the container to the side wall of the garden pond, one of the sides provided with counter-coupling means being straight in horizontal section while the opposite side of the container is outwardly curved in horizontal section, wherein the container is longer on the outwardly curved side having counter coupling means than on the opposite side.

These measurements make it possible to provide also garden ponds having side walls which are curved in horizontal section with containers which are disposed adjacent to each other along the whole circumference of the garden pond. In parts of the garden pond which are inwardly curved the container can be attached with its straight side to the side wall of the garden pond, and in case of an outwardly curved part of the garden pond the container can be disposed with its outwardly curved side to the side wall of the garden pond. Due to this configuration of the container which is substantially trapezium-shaped in horizontal section it is made possible to arrange adjacent containers abutted against each other in every position.

It is favourable if the sides of the second pair of sides of each container comprise connection means for mutually connecting adjacent containers.

This feature ensures a good interconnection of adjacent containers. Of course it is also possible to fix each support separately with respect to the side wall of the pond.

The invention also includes a container for marsh plants or the like for use in the garden pond described hereinbefore.

The invention will hereafter be elucidated with reference to the drawing showing an embodiment of the garden pond and container, for example for marsh plants, according to the invention by way of example.

Fig. 1 is a schematic plan view of a garden pond containing containers for marsh plants according to the invention.

Fig. 2 is an enlarged sectional view along the line II-II of fig. 1.

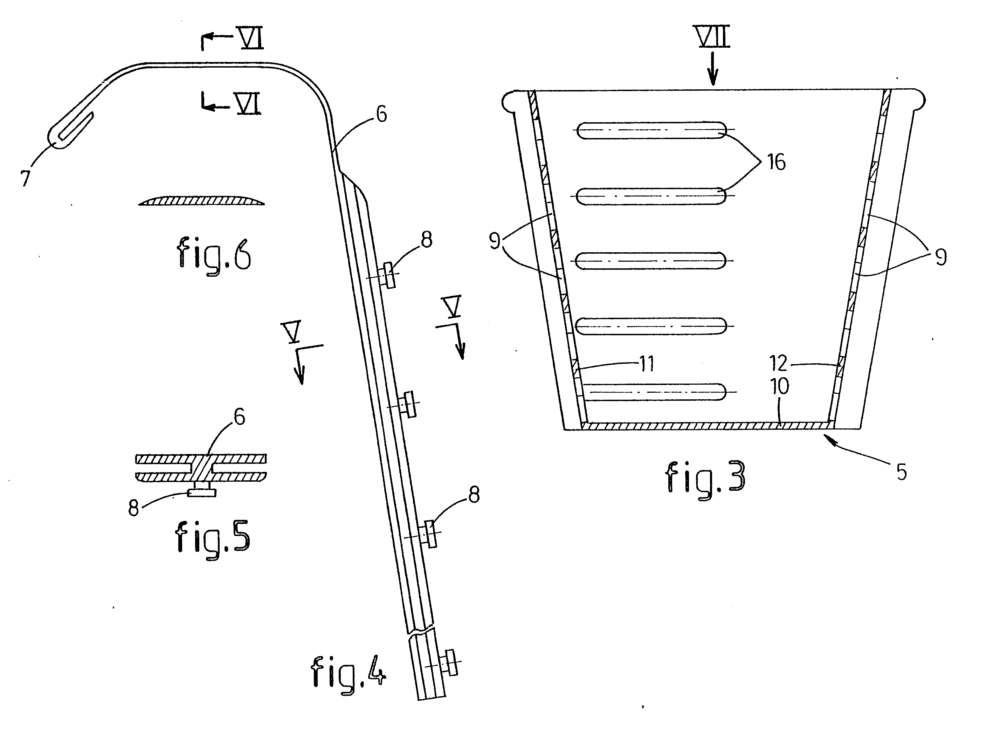

Fig. 3 is a sectional view of the container of fig. 2.

Fig. 4 is a sectional view of the support for the container of fig. 2.

Fig. 5 is a sectional view along the line V-V of fig. 4.

Fig. 6 is a sectional view along the line VI-VI of fig. 4.

Fig. 7 is a view according to the arrow VII of fig. 3.

Fig. 8 is a sectional view along the line VIII-VIII of fig. 7.

Fig. 9 is a sectional view along the line IX-IX of fig. 2.

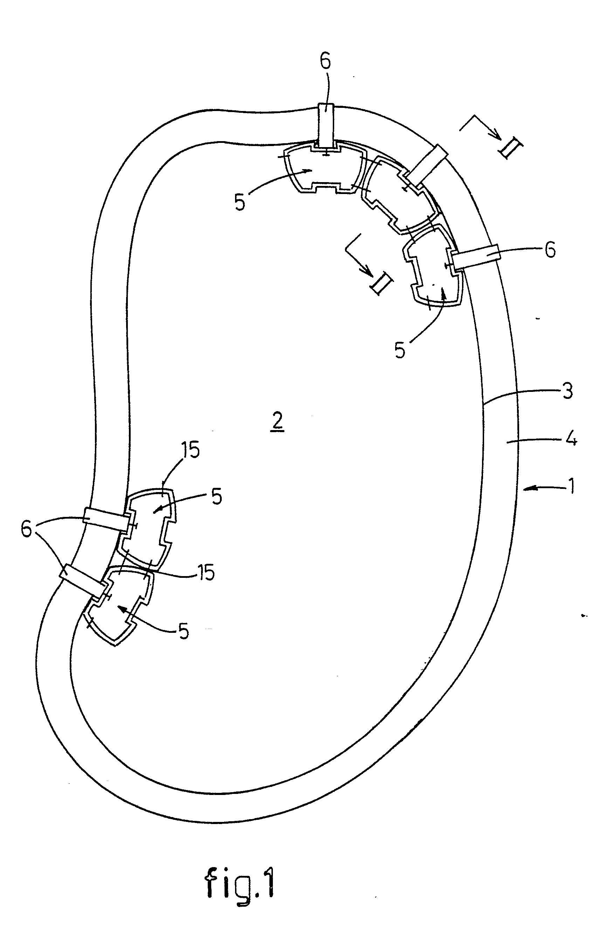

In the plan view of fig. 1 there is shown a garden pond 1 having a bottom wall 2 and an adjacent side wall 3. The side wall inclines upwardly and outwardly and terminates into a horizontal edge 4. According to the invention it is possible to arrange one or more containers 5 in the garden pond, which are adapted to contain bank coverings, such as plants, stones and the like.

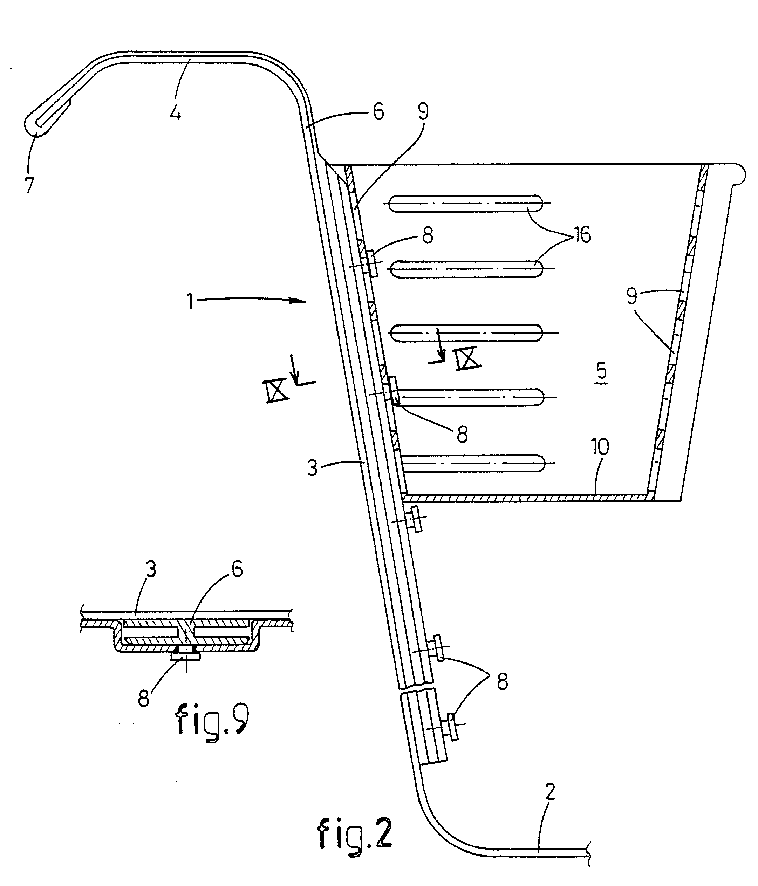

As can be seen in fig. 2, each container 5 is coupled to a support 6 configured in the shape of a hook and hanging with a hook-like end 7 over the edge 4 of the garden pond. In principle the support 6 can be hung loose to the side wall 3 of the garden pond 1, but it is also possible to fix the support to the side wall 3, for example by means of Velcro-tape.

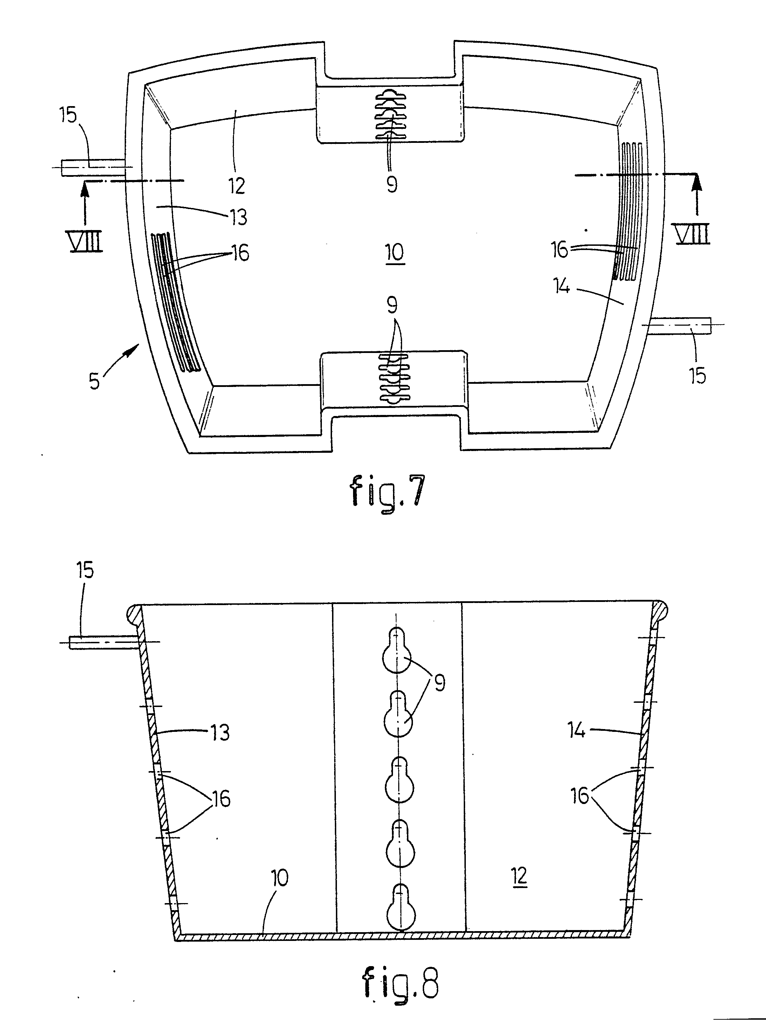

The support 6 is provided with a plurality of regularly vertically spaced mushroom-shaped projections 8 adapted to engage with openings 9 (see fig. 8) having a shape of a keyhole turned upside-down and being provided in a side of the container 5. The center distance between adjacent openings 9 in the container is twice as small as the center distance between two adjacent projections, thereby allowing for a fine height adjustment of the container 5 with respect to the support 6. Under all circumstances always two projections 8 are in engagement with openings 9 of the container 5.

As is clearly shown in fig. 7, the container 5, which has a bottom 10 and two pairs of sides 11, 12 and 13, 14, is provided with the openings 9 on said two opposite sides 11 and 12 thereby enabling the container 5 to be attached to the projections 8 of the support 6 with its one side 11 as well as with its other side 12. The shape of the sides 11 and 12 is such that the container 5 is attached to the support 6 with the straight side 11 if the side wall 3 of the garden pond 1 is curved inwardly at that position. Contrary, the container 5 is connected to the support 6 with its side 12 if the side wall 3 is curved outwardly there.

The shape of the two other sides 13 and 14 of the container 5 is chosen such that the containers 5 can be arranged about the whole circumference of each garden pond 1 in an adjacent and adjoining manner.

The sides 13 and 14 of each container 5 can be provided with connection means, like pins 15, adapted to engage into slots 16 of an adjacent container 5. The slots 16 are elongated and horizontal and are also provided with the same heightwise distribution as that of the openings 9 so that in any vertical position of the container 5 and in any relative position of adjacent containers 5 a pin 15 of one container is able to engage into a slot 16 of the other container. These connection means 15 and 16 have, of course, only a function if the containers 5 are arranged adjacent to each other to the side wall 3 of the garden pond 1. Obviously this is not necessary.

It is also possible to attach the containers 5 to the side wall 3 of the garden pond 1 completely separated from each other, wherein the support 3 can be fixed to the side wall 3 of the garden pond, if required.

The invention provides a garden pond in which a bank covering system is created which is very flexible and which can be easily adapted to any desire. The containers also provide for an escape from the garden pond to small mammals, such as hedgehogs, which have fallen into the water.

The invention is not restricted to the embodiment shown in the drawing by way of example which can be varied in different ways within the scope of the invention.

Claims

1. Garden pond having a bottom wall and an adjacent side wall, **characterized** by a container, for instance for marsh plants, of which at least the top is open and which is adapted to be arranged adjacent to the side wall of the garden pond.

2. Garden pond according to claim 1, **characterized** in that a container is adapted to be releasably attached to the inner side of the side wall.

3. Garden pond according to claim 2, **characterized** in that the container is adapted to be attached on different levels.

4. Garden pond according to claim 3, **characterized** in that the container is adapted to be attached to a support on different levels, the support, for example, being adapted to be hung on the upper edge of the side wall of the garden pond.

5. Garden pond according to claim 4, **characterized** in that the support is provided with a plurality of coupling means arranged on different levels and adapted to couple the container in different heightwise positions.

6. Garden pond according to claim 5, **characterized** in that the support has a plurality of regularly vertically spaced projections and in that the container has on at least one side a plurality of vertically arranged openings into which the projections can engage.

7. Garden pond according to claim 6, **characterized** in that the center distance between two adjacent openings in the container is twice as small as the center distance between two adjacent projections of the side wall, there being at least two hooks coupled with openings in the container.

8. Garden pond according to one of claims 5-7, **characterized** in that the side wall is reinforced at the position of the coupling means.

9. Garden pond according to one of the preceding claims, **characterized** in that a plurality of separate containers, for instance for marshplants, are adapted to be distributed along the circumference of the garden pond.

10. Garden pond according to claim 9, **characterized** in that supports are distributed about the circumference of the side wall of the garden pond, the supports having coupling means to which separate containers can be coupled such that they substantially abut.

11. Garden pond according to claim 10, **characterized** in that each container comprises two pairs of opposite sides, wherein the sides of the first pair are each provided with counter-coupling means for attaching the container to the side wall of the garden pond, one of the sides provided with counter-coupling means being straight in horizontal section while the opposite side of the container is outwardly curved in horizontal section, wherein the container is longer on the outwardly curved side having counter coupling means than on the opposite side.

12. Garden pond according to claim 11, **characterized** in that the sides of the second pair of sides of each container are each curved outwardly in horizontal section.

13. Garden pond according to claim 10, 11 or 12, **characterized** in that the sides of the second pair of sides of each container comprise connection means for mutually connecting adjacent containers.

14. Container, for example for marsh plants, for use in a garden pond according to one of the preceding claims.

fig.1

EP 0 361 555 A1

fig.9

fig.2

fig.6

fig.5

fig.4

fig.3

EP 0 361 555 A1

fig.7

fig.8

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-270487 (THOMANN)<br>* page 1, lines 12 - 19; figure 1 * | 1, 14 | A01G9/02 |
| Y | | 2-4 | |
| X | DE-U-8704542 (UBBINK)<br>* page 4, last paragraph - page 6, last paragraph; figures 1, 2 * | 1, 14 | |
| Y | | 2 | |
| Y | DE-A-2264722 (HAUGOLIT-PLASTIK)<br>* page 5, paragraph 7 - page 10, last paragraph; figures 1-5 * | 3, 4 | |
| A | GB-A-2124873 (PINK)<br>* the whole document * | 1, 11 | |
| A | US-A-3141442 (HARRIS)<br>* the whole document * | 1 | |

TECHNICAL FIELDS SEARCHED (Int. Cl.5)

A01G
A01K
A47H

The present search report has been drawn up for all claims

| Place of search | Date of completion of the search | Examiner |
|---|---|---|
| THE HAGUE | 11 DECEMBER 1989 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)